# EUROPEAN PATENT APPLICATION

(11) **EP 1 683 409 A1**
(43) Date of publication of application: **26.07.2006**
(21) Application number: 03756695.7
(22) Date of filing: 17.10.2003
(51) Int. Cl.: A01G 9/00, A01G 31/00

(54) **PROCESS FOR PRODUCING PEANUT SPROUTS**

(71) Applicant: Ueharashokai Co., Ltd., Fukuoka 814-0104 (JP)
(72) Inventor: MAEDA, Takiro, Fukuoka-Shi, Fukuoka 819-0012 (JP)
(74) Representative: Breese Derambure Majerowicz
(86) International application number: PCT/JP2003/013343
(87) International publication number: WO 2005/036951

(57) **Abstract**

It is intended to provide a process for producing peanut sprouts by improving the growth environment and designing the most adequate growth conditions for the properties of peanut sprouts, whereby a high yield can be ensured while preventing the occurrence of diseases or fungi and the texture of the sprouts can be improved. A diluted aqueous solution containing an essential metal component activating organisms is sprinkled in the form of fine mist or droplets over a water-permeable medium at definite intervals. Thus, moisture and nutrients can be supplied to peanut plants on the medium and, at the same time, the environmental humidity can be maintained at a definite level. Thus, appropriate moisture and the essential metal can be supplied to the peanut plants while preventing the plants from contact with excessive moisture. As a result, germination inhibitor components of peanut can be attenuated and germination can be promoted. By maintaining the environmental atmosphere at an appropriate humidity, aerobic contaminating germs can hardly grow in the environment and thus the occurrence of fungi and bacteria exerting undesirable effects on the appearance or taste can be regulated in the course of germination. Thus, the process form sowing to germination can be smoothly carried out and products for shipment having a favorable appearance and taste can be obtained at a considerably elevated ratio.

## Description

### [Technical field]

This invention concerning the peanut sprout production method of germinating peanuts and allowing the growth and extension of hypocotyls is related to a production method by which an especially increased yield of high quality peanut sprouts can be ensured. In this Specification the word "germination" is used as a word which in a broad sense indicates a series of processes from exposure of the radicle that has grown inside the seed coat to outside of the seed coat, to the appearance of plumules.

### [Background technique]

The production of sprouts from beans such as soybeans, red beans, and mung beans, which characteristically swell and germinate after being soaked in water, has already been generally carried out. Even though these beans, which are the raw materials for sprout production, do not contain any vitamin C at all, the sprouts produced by using these beans and germinating them do contain vitamin C. In addition, there are other notable changes such as a decrease in the fat content and decomposition of the protein components to form organic salts.

Because of these advantages, people's interest in sprouts as a health food is increasing. Until now, peanuts were not considered suitable as a raw material for sprout production because they are difficult to germinate after being soaked in water, but this inventor has succeeded in producing peanut sprouts after many years of research, and the patent for these peanut sprouts was recently registered and disclosed as Patent No. 2698719.

In addition, the method of producing peanut sprouts by germinating peanuts in an environment in which calcium hypochlorite solution is sprayed on peanuts placed on a mesh-type plate has been proposed in the Toku-kai-hei No. 9-248065 official gazette as a peanut sprout production method different from that mentioned above. The key points mentioned in this gazette are that the germination of peanuts is faster, the elongation of hypocotyls is straight, and they elongate in a short time.
[Patent literature 1] Patent No. 2698719 official gazette
[Patent literature 2] Toku-kai-hei No. 9-248065 official gazette

### [Disclosure of invention]

### [Problems which the invention is going to solve]

Peanut sprout production in the past was carried out by the methods shown in each previously-mentioned patent literature, and peanut sprouts were obtained in around one week by the former production method shown in the previously-mentioned "Patent literature 1," but the peanuts were soaked for many hours in aqueous solution containing bioessential metals as a pretreatment, following which the peanuts were sown in and kept in a gelatin culture medium; therefore the peanuts already contained sufficient moisture at the initial sowing stage. In addition, the peanuts were kept under conditions in which they were surrounded by moisture and nutritious substances, the peanuts themselves putrefied easily, and under these conditions it was very easy for mold to develop. Even though calcium hypochlorite, a bactericide, was mixed with the gelatin, its efficacy was actually not sufficient. Some peanuts rotted, and many of the peanut sprouts in the culture medium were attacked by fungi and bacteria that can cause disease, the appearance of peanut sprouts after they had grown was poor, and the percentage of good products that could be shipped was low; in other words, poor yield was a problem with this method.

On the other hand, the latter previous method, described in "Patent literature 2," is efficacious because it does not need to use a gelatin culture medium, and the cultivation of and production of a large quantity of peanut sprouts can be done efficiently, but this method also has a problem; the peanut sprouts do not taste very good, because merely by the sprinkling of calcium hypochlorite solution, sufficient amounts of bioessential metal components cannot be provided to the peanuts during germination and growth. Also, calcium hypochlorite, a chlorine-based bactericide (disinfectant), is toxic and difficult to handle; this interferes with the improvement of workability related to sprout production. Further, it has recently been clarified that calcium hypochlorite acts with the lignin contained in peanuts to generate chloroform, a trihalomethane known to be carcinogenic. Therefore, under the present circumstances the use of calcium hypochlorite solution is not desirable.

The purpose of this invention is to provide a peanut sprout production method that will solve the previously-mentioned problems and improve the growth environment, setting the optimum growth conditions in accordance with the characteristics of peanut sprouts, and maintaining a high yield by controlling the occurrence of disease and fungi; on the other hand, this method can improve the crispness of the peanut sprouts.

### [Measures in order to solve problems]

The purpose of the peanut sprout production method related to this invention is to place peanuts in a dry condition on a fixed water permeable culture medium, and use amist-spraying process to spray, as a mist with particle diameters of 0.01-10µm, a diluted aqueous solution made by diluting with water a metal-containing solution containing trace metals which are the minimum essential components for biometabolism, onto the culture medium for a fixed duration, and a water drop sprinkling process which sprinkles the previously-mentioned diluted aqueous solution as visible water drops onto the culture medium for a fixed duration, alternating between the processes at fixed time intervals to maintain a relative humidity of 85% or more in the ambient environment of the peanuts at a temperature of 24-25°C for the growth of hypocotyls, in the method to produce peanut sprouts by germinating peanuts and allowing the hypocotyls to grow and elongate to a fixed length.

As mentioned above, in this invention, peanuts can be given appropriate amounts of moisture and essential metal components without putting the peanuts in a condition of contact with excessive moisture, by spraying diluted aqueous solution containing essential metal components that activate organisms, in the forms of a very fine mist and water drops, at intervals of fixed duration to provide moisture and nutritious substances to the peanuts on the culture medium and simultaneously to maintain the ambient environment of the peanuts at a fixed humidity. In this way, germination of peanuts can be accelerated by rendering the germination-repressing component of peanuts powerless. Also, by appropriately maintaining the humidity of the ambient atmosphere, an environment is created in which it is difficult for various aerobic bacteria to generate, and it is difficult for the fungi and bacteria which have a bad influence on the appearance and taste of peanuts to generate during the germinating process; therefore, by safely germinating the sown peanuts, the percentage of products with excellent appearance and taste that can be shipped can be increased remarkably. Production workability can also be greatly improved and time, labor, and the cost of work can be reduced because this invention does not require the work of soaking peanuts in an aqueous solution before sowing and does not use calcium hypochlorite.

The purpose of the peanut sprout production method related to this invention is to place peanuts in a dry condition on a fixed water-permeable culture medium, and carry out alternately at fixed time intervals a mist spraying process to sprinkle, as a mist with a particle diameter of 0.01-10µm, a diluted aqueous solution, made by diluting with water a metal-containing solution which contains trace metals that are the minimum essential components for biometabolism, onto the culture medium for a fixed duration, and a water drop sprinkling process which sprinkles the previously-mentioned diluted aqueous solution as visible water drops onto the culture medium for a fixed duration, to maintain an ambient environment for the peanuts that has a relative humidity of 85% or more at a temperature of about 30°C until the start of germination, and to maintain the ambient environment for the peanuts at a relative humidity of 85% or more at a temperature of about 24-25°C after germination has started, to grow hypocotyls by this method of producing peanut sprouts by germinating peanuts, and allowing the hypocotyls to grow and elongate to a fixed length.

As mentioned above, in this invention, appropriate amounts of moisture and essential metal components can be provided to peanuts on the culture medium, without putting peanuts in the condition of being in contact with excessive moisture, by sprinkling a diluted aqueous solution containing essential metal components which activate organisms in the forms of a very fine mist and water drops at intervals of fixed duration to provide moisture and nutritious substances to the peanuts on the culture medium, simultaneously maintaining the ambient temperature and humidity conditions appropriate for growth. In this way the germination of peanuts can be accelerated by rendering the germination-repressing component of peanuts powerless; also, by maintaining the appropriate ambient temperatures and humidity, an environment is achieved in which it is difficult for various aerobic bacteria to grow, and in particular, by carrying out appropriate temperature control to match the growth conditions which accelerate the growth of peanut sprouts it is possible to control putrefaction and the generation and propagation of fungi and bacteria, resulting in a remarkable increase in the percentage of products with excellent appearance and taste that can be shipped, by safe germination of the sown peanuts. In addition, the period from sowing to shipment of products can be drastically shortened.

The peanut sprout production method related to this invention sets the duration of each previously-mentioned sprinkling process at about 3 minutes each, and sets the interval between the alternate carrying out of each sprinkling process at about 3 hours, as needed.

As mentioned above, in this invention, the sprinkling duration for the diluted aqueous solution is about 3 minutes for both the mist form and water drop form, and these two types of sprinkling are done alternately with intervals of about 3 hours between them. Based on this moisture supply, the humidity and moisture volume around the peanuts can be reliably kept in conditions in which the propagation of various bacteria is unlikely to occur, by optimizing the conditions of the ambient space around the peanuts and the moisture supplied to the peanuts, and the yield of good products can be improved by preventing the generation and propagation of fungi and various bacteria and the occurrence of putrefaction which causes deterioration in the product appearance.

Also, in the peanut sprout production method related to this invention, the previously-mentioned metal-containing aqueous solution contains at least the previously-mentioned trace metals: iron, manganese, zinc, copper, cobalt, molybdenum, and boron, as needed.

As mentioned above, in this invention, iron, manganese, zinc, copper, cobalt, molybdenum, and boron, which are the essential components for biometabolism, are provided to the peanuts for absorption as an aqueous solution; this reliably renders the germination-repressing component of peanuts powerless and accelerates their germination, and can simultaneously increase the yield of good products by making the peanuts disease-resistant; it can also improve the taste of the peanut sprouts.

### [Best form for carrying out the invention]

The following explains the peanut sprout production method related to the form of carrying out this invention. The peanut sprout production method related to the form of carrying out this invention is that peanuts in a dry condition are placed on a water permeable culture medium, and that the mist spraying process, which sprays the culture medium for a fixed duration with the diluted aqueous solution, made by diluting a fixed metal-containing aqueous solution with water, in the form of a fine mist, and the water drop sprinkling process, which sprinkles the culture medium for a fixed duration with the diluted aqueous solution made by diluting a fixed metal-containing aqueous solution with water, in the form of water drops, are alternated, to start the germination of the peanuts and allow the hypocotyls to grow, while maintaining the temperature and humidity in the ambient environment of the peanuts in fixed conditions.

This growth environment for peanut sprouts is a closed space (room) of a fixed size with its temperature controlled to 24-25°C. The mist-spraying process and water-drop sprinkling process are alternately carried out for about 3 minutes each with intervals of about 3 hours between them, to maintain the relative humidity at 85% or more. Light and various bacteria are kept out of this space. Mesh-type trays made of synthetic resin with excellent water permeability are used as the culture medium. This is based on the method in which peanuts are sown on this type of culture medium in a dry condition, and the humidity around each peanut and the condition of the presence of water are appropriately controlled; this can suppress the propagation of various bacteria more effectively than the conventional method of enclosing peanuts in a gelatin culture medium. Even though the peanuts are sown in a dry condition, there is almost no lengthening of the period until the start of germination beyond that in the conventional process involving pretreatment + gelatin medium. This was discovered by the inventor's intensive research and many developments after the inventor applied for the patent related to the previously-mentioned "Patent literature 1."

In the previously-mentioned mist spraying process, the diluted aqueous solution is sprayed as fine particles with particle diameters of 10µm or less, referred to by some people as "mist" or "forest fog." For the previously-mentioned diluted aqueous solution applied to peanuts in the form of a mist with particle diameters of 10µm or less, water containing ferrous and ferric ions in a fixed concentration (ferrous and ferric salt solution) is used in the ratio of about half of the total solution. It is desirable to use activated treated water produced through some other activation process as the remainder of the diluted solution.

On the other hand, for the previously-mentioned diluted solution provided in the form of visible water drops in the previously-mentioned water drop sprinkling process, activation-treated water treated by an activation process in which the water is in contact with a large quantity of good far-infrared-radiating granulated substances, is used in the ratio of about half of the total diluted solution. It is desirable to use activated treated water produced through some other activation process as the remainder of the diluted solution. The previously-mentioned aqueous solution containing metals can also include, for instance, the plant activity enhancing agent proposed by this inventor, et al. and mentioned in the detailed explanation in Patent Gazette No. sho 63-5365. Specifically, bivalent sulfates or nitrates of each of iron, manganese, zinc, copper, and cobalt, and ammonium molybdate or sodium molybdate, as well as boric acid, are added to citric acid at individually fixed rates, and this mixture is agitated in hot water to obtain the solution which is the agent. The following shows the ratios in detail.

The desirable mixing ratio is as follows. The desirable mixing rate is as follows. For iron, add about 0.8 mol of ferrous sulfate or ferrous nitrate; for each manganese, zinc, copper, and cobalt, add about 0.2 mol of bivalent sulfate or nitrate; and for ammonium molybdate and borate, add about 0.75 mol of molybdenum and boron to 1 mol of citric acid. Each metal-containing aqueous solution component and its compounding ratio can be other than that mentioned above.

Next, the production process based on the peanut sprout production method related to this working form will be explained. After water is passed through various systems that constitute the work processes for filtration of the water for dilution, mixing ions into the water, or activation of the water, the previously-mentioned metal-containing water is mixed at a fixed rate with the water that has passed through these processes, to dilute the metal-containing solution to a 1000-times dilution which can be sprinkled in the form of a mist or water drops. This diluted solution is stored temporarily. Also, the temperature in the previously-mentioned growing space is kept roughly at a fixed temperature by such well-known means of maintaining temperature as the blowing of hot air into the space.

First, without applying any pretreatment, the peanuts from which the sprouts will be produced are sown as-is in a dry condition on each tray which will be the culture medium in the previously-mentioned space for growing, in which the temperature is kept fixed at about 25°C. In the previously-mentioned mist spraying process and water drop sprinkling process, which are alternated for about 3 minutes each with intervals of about 3 hours between them, the diluted solution, in the form of mist or water drops, is supplied to the peanuts from the upper part of the space. The supplying of diluted solution for each form of water particles is done at 6-hour intervals. Under this mechanism, one form of solution is supplied in the middle of the period during which the other form of solution supply is suspended.

Humidity inside the space is maintained appropriately at 85% or more by the supply of a diluted solution in the form of a fine mist in the mist spraying process, while only the minimum amount of moisture, condensed as dew on the surface of the seeds, is absorbed by them, so the seeds are not exposed to excessive moisture.

Also, in the water drop sprinkling process, the diluted solution is supplied to the space for growing as water drops, which adhere directly to the seeds to provide the seeds with sufficient moisture and nutritious substances (metal components). However, excess moisture flows down below the mesh of each tray, and is discharged. Because of the appropriate intervals between applications of water, the propagation of various bacteria will not be promoted by the presence of excess moisture around the seeds.

In the situation of alternately-repeated mist spraying and water drop sprinkling processes at the fixed temperature (about 25°C), the metal components contained in the diluted solution that is absorbed by the peanuts render powerless the germination-repressing component contained in the peanuts themselves, putting the peanuts in a condition in which they germinate easily.

Germination of peanuts starts about 3 days after they have been sown, and hypocotyls and radicles appear on the outside of the peanuts. 4 to 5 days after this stage, the length of hypocotyls and radicles has grown to about 10cm and they can be harvested as peanut sprouts. When the peanut sprouts are harvested at this point, the hypocotyl length is appropriate and not overgrown, and there is no hard pith part inside the hypocotyl, so there is a soft but excellent crispy sensation in the mouth when eating these peanut sprouts.

In this way, in the peanut sprout production method related to this working form, diluted solution containing metal components that activate organisms is sprayed at fixed intervals in the forms of a fine mist and water drops, to provide moisture and nutritive substances to the peanuts on the culture medium and to simultaneously maintain the ambient environment at a fixed humidity. In this way peanuts are provided with appropriate moisture and metal components without putting the peanuts in contact with excessive moisture, the germination-repressing component of the peanuts is rendered powerless, and the germination of the peanuts is promoted. Also, the humidity of the ambient atmosphere is appropriately maintained to provide an environment in which various aerobic bacteria are unlikely to be generated, and the fungi and bacteria that have a bad effect on the appearance and taste of peanuts are also unlikely to be generated in the germination process, so that the peanuts sown can be safely germinated, and there is a remarkable increase in the rate of products with excellent appearance and taste that can be shipped.

The peanut production method related to the previously-mentioned working form is organized to grow peanut sprouts from sowing through germination to harvest within the same space for growing at a fixed temperature; however, in addition to this method, it is possible to divide the peanut sprout growing process into the process up to the start of germination (stage in which radicles are exposed to the outside of the seeds), and the process following that. Each of these processes can be carried out in a separate space for growing, with different environmental conditions. For instance, it is possible to organize sprouting so that the peanut seeds are kept in a germination room where the temperature is maintained at about 30°C and the humidity is kept at 85% or more until germination starts, then after germination has started, the germinated peanuts are grown in a growth room where the temperature is kept at 24-25°C and the humidity is controlled to 85% or more. When the peanuts are kept in an environment with a higher temperature during the period up to when germination starts, this makes germination faster, shortening the period prior to the start of germination, and this shortens the total growing period.

If, after germination has started, the germinated peanuts are kept in an environment with a lower temperature at which disease, etc., are less likely to occur, there is stable growth of the peanut sprouts, and the processes from sowing to shipment can be carried out speedily. After the peanut sprouts have been harvested and the room becomes vacant, germinated peanuts can be transferred from the germination room to this vacant room; after this, a new batch of peanuts can be placed in the germination room. Multiple growing spaces can be utilized in parallel at the same time in order to shorten the intervals between shipments of peanut sprouts.

Also, in the peanut sprout production method related to the previously-mentioned working form, the dilution water used to make the diluted solution is defined as water that has been put through a fixed activation system. A fixed quantity of metal-containing solution is mixed with this water to produce the diluted solution. Regardless of this, however, city water, well water, or rain water for which no special water treatment other than filtration has been done, can be used as a part or all of the dilution water which can be mixed with a fixed quantity of the metal-containing solution to produce the diluted solution.

## Claims

1. Among methods for producing peanut sprouts by germinating peanuts and allowing the hypocotyls to grow and elongate to a fixed length, the distinctive features of this peanut sprout production method are that peanuts are placed in a dry condition on a fixed water-permeable culture medium, and an aqueous solution containing trace metals which are the minimum essential components for biometabolism, is diluted with water to prepare a diluted solution; a mist-type sprinkling process which sprays the previously-mentioned diluted solution in the form of a mist with particle diameters of 0.01-10µm onto the culture medium for a fixed duration, and a process to sprinkle the previously-mentioned diluted solution in the form of visible water drops onto the culture medium for a fixed duration, are carried out alternately at fixed time intervals to maintain the ambient environment of peanuts at a relative humidity of 85% or more at a temperature of 24-25°C for growth of the hypocotyls.

2. In the peanut sprout production methods of germinating peanuts and allowing the growth and extension of the hypocotyls to a fixed length, the distinctive features of this peanut sprout production method are that peanuts are placed in a dry condition on a fixed water-permeable culture medium, and an aqueous solution containing trace metals which are the minimum essential components for biometabolism, is diluted with water to prepare a diluted solution; a mist-type sprinkling process which sprays the previously-mentioned diluted solution in the form of a mist with particle diameters of 0.01-10µm onto the culture medium for a fixed duration, and a process to sprinkle the previously-mentioned diluted solution in the form of visible water drops onto the culture medium for a fixed duration, are carried out alternately at fixed time intervals to maintain the ambient environment of peanuts at a relative humidity of 85% or more at a temperature of 30°C until germination starts, with the temperature kept at 24-25°C for growth of the hypocotyls after germination has started.

3. In the peanut sprout production method mentioned in the previously-mentioned Claim 1 or 2, the distinctive features of the peanut production method are that the duration of each previously-mentioned water spraying process is set at about 3 minutes, and that the interval between each of these alternately carried out water spraying processes is set at about 3 hours.

4. In either of the peanut sprout production methods mentioned in the previously-mentioned Claims 1 or 3, the distinctive features of the peanut production method are that the previously-mentioned aqueous solution containing metals contains at least iron, manganese, zinc, copper, cobalt, and molybdenum as the previously-mentioned trace metals, and also includes boron.
